# EUROPEAN PATENT SPECIFICATION

(11) **EP 4 056 246 B1**
(45) Date of publication and mention of the grant of the patent: **14.10.2026**
(21) Application number: 20883741.9
(22) Date of filing: 27.10.2020
(51) Int. Cl.: B01D 3/30, B01D 3/34, B01D 3/38

(54) **DISTILLATION APPARATUS**
DESTILLATIONSVORRICHTUNG
APPAREIL DE DISTILLATION

(30) Priority: 05.11.2019 KR 20190140380
(43) Date of publication of application: 14.09.2022
(73) Proprietor: Hanwha Solutions Corporation, Jung-gu Seoul 04541 (KR)
(72) Inventor: AHAN, Wooyoul, Daejeon 34128 (KR); LEE, Shinbeom, Daejeon 34128 (KR); LIM, Dongwook, Daejeon 34128 (KR); JEON, Hyojin, Daejeon 34128 (KR); HAN, Keedo, Daejeon 34128 (KR)
(74) Representative: Kraus & Lederer PartGmbB
(86) International application number: PCT/KR2020/014736
(87) International publication number: WO 2021/091148

(56) References cited:
- EP-A1- 0 078 332
- CN-A- 109 045 737
- FR-A- 897 179
- JP-A- 2005 313 100
- KR-A- 20120 114 848
- KR-A- 20150 010 635
- KR-A- 20150 034 882
- KR-A- 20180 075 814
- US-A- 1 602 014
- US-A- 4 995 945
- US-A1- 2014 107 302

## Description

### CROSS-REFERENCE TO RELATED APPLICATIONS

This application claims priority under 35 U.S.C. §119 to Korean Patent Application No. 10-2019-0140380, filed on November 05, 2019, in the Korean Intellectual Property Office.

### TECHNICAL FIELD

The following disclosure relates to a distillation apparatus, and more particularly, to a distillation apparatus of recovering a high-purity product through separation of a volatile component from a distillation target material using thermal energy and a centrifugal force.

### BACKGROUND

A stripping column is a device capable of recovering a high-purity product by evaporating a volatile component from a liquid-phase distillation target material using a vapor (gas or steam) in a multi-stage distillation column.

In this case, the stripping column requires hightemperature thermal energy in order to recover the high-purity product from the distillation target material, and thus has a problem that it is difficult to separate and recover the high-purity product in foods or polymers vulnerable to heat.

A spinning cone column (SSC) uses mechanical energy of a centrifugal force together with the thermal energy, and Japanese Patent Laid-Open Publication No. 1995-022646 has been disclosed as Related Art Document related to the SCC.

The SSC recovers a high-purity product from a distillation target material using mechanical energy of a centrifugal force through the distillation target material introduced from an upper portion and a vapor (steam) flowing from a lower portion, and thus, a contact time between the distillation target material and thermal energy is short, such that the SSC may recover the high-purity product at a lower temperature than the stripping column.

Meanwhile, when a stripping target material is in the form of polyvinyl chloride (PVC) slurry or latex, heat or kinetic energy breaks particle stability (or colloidal stability) to cause coagulation. In particular, in a case of a commercial process, a diameter of a spinning cone becomes large. Therefore, when the spinning cone is spun at a high speed, a shear force increases at a tip of the spinning cone to break stability of the latex, which may cause a clogging phenomenon of a post-process. For this reason, in the case of the commercial process, the SSC needs to be operated at a low speed.

However, when the SSC is operated at a low speed, the shear force at the tip of the spinning cone may be decreased, but a pooling phenomenon of the slurry or the latex occurs in the vicinity of a spinning shaft, and a sudden load is applied to the spinning shaft and a motor due to a weight of the slurry or the latex. In addition, due to the pooling phenomenon, a problem that a scale is generated in the vicinity of the spinning axis by PVC particles or a discoloration problem generated by the PVC particles residing for a long time is caused. Another distillation apparatus is disclosed in FR897179A.

### SUMMARY

An embodiment of the present invention is directed to providing a distillation apparatus capable of decreasing generation of a scale in the vicinity of a spinning shaft even when being operated at a low speed.

In one general aspect, a distillation apparatus of the invention is defined in claim 1.

An inclination angle of the first surface may be 30° or more and 90° or less with respect to the spinning shaft.

Alternatively, an inclination angle of the first surface may be 45° or more and 60° or less with respect to the spinning shaft.

### BRIEF DESCRIPTION OF THE DRAWINGS

FIG. 1 is a view illustrating a distillation apparatus according to an embodiment of the present invention.
FIG. 2 is a view illustrating a distillation apparatus according to another embodiment not part of the present invention.
FIG. 3A is a view illustrating Comparative Examples 1 and 2 of the present invention, and FIGS. 3B to 3D are views illustrating Examples 1 to 3.

### DETAILED DESCRIPTION OF EMBODIMENTS

Hereinafter, a distillation apparatus according to the present invention will be described in detail with reference to the accompanying drawings. The accompanying drawings are provided only by way of example in order to sufficiently transfer the technical spirit of the present invention to those skilled in the art, and the present invention is not limited to the accompanying drawing provided below, but may be implemented in other forms.

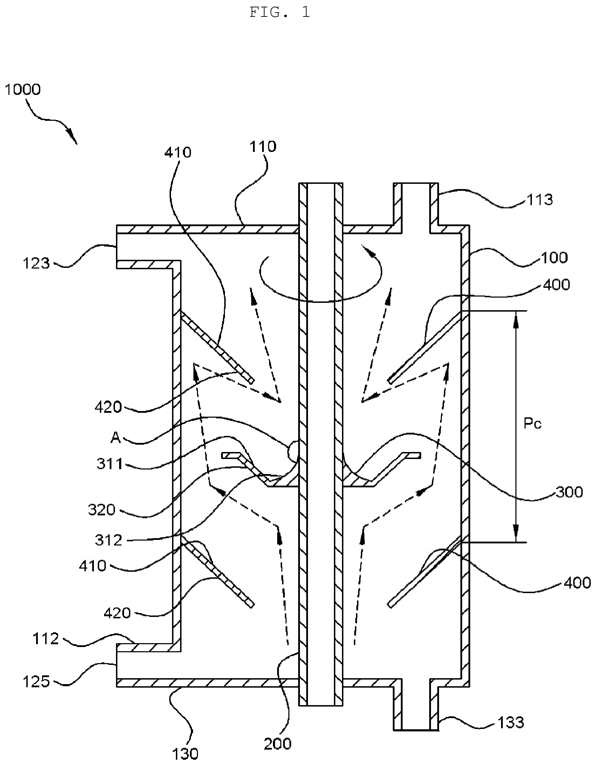

FIG. 1 is a view illustrating a distillation apparatus according to an embodiment of the present invention.

Referring to FIG. 1, the distillation apparatus 1000 according to an embodiment of the present invention includes a body part 100, a spinning shaft 200, a spinning cone 300, and a fixed cone 400.

The body part 100 is a component accommodating the spinning shaft 200, the spinning cone 300, and the fixed cone 400, and a distillation target material is introduced from an upper portion of the body part 100, and a vapor (gas or steam) is introduced from a lower portion of the body part 100.

More specifically, the body part 100 includes an upper plate 110, a side plate 120, and a lower plate 130. Here, the side plate 120 is a structure connecting the upper plate 110 and the lower plate 130 to each other while being formed in a tubular shape.

The body part 100 includes a distillation target material introduction part 123 which is provided at an upper side of the side plate 120 so that the distillation target material may be introduced from the upper portion and moved downward by gravity and through which the distillation target material is introduced. In addition, the body part 100 includes a vapor introduction part 125 which is provided at a lower side of the side plate 120 so that the vapor may rise upward from a bottom in an opposite direction to an introduction direction of the distillation target material and through which the vapor is introduced.

In addition, a vapor discharge part 113 is provided at one side of the upper plate 110 so that a remaining vapor may be discharged to the outside, and a recovery part 133 for recovering a high-purity product in which a volatile material is separated from the distillation target material is provided at one side of the lower plate 130.

However, since the distillation target material introduction part 123, the vapor introduction part 125, the vapor discharge part 113, and the recovery part 133 may be variously disposed so as to meet their functional purposes, they are not limited to the above-described disposition structures or the illustrated numbers.

The spinning shaft 200 is disposed in a vertical direction inside the body part 100, and may axially spin.

In this case, although not illustrated in FIG. 1, a spinning shaft control unit for supplying spinning power to the spinning shaft 200 may be provided in the body part 100.

Meanwhile, the spinning cone 300 is a component provided on an outer surface of the spinning shaft 200.

More specifically, the spinning cone 300 includes an upper surface 310 and a lower surface 320, is formed along a circumference of the outer surface of the spinning shaft 200, and has a shape in which a diameter thereof increases toward an upper tip of the spinning cone 300 (i.e., in an upward direction of the body part 100). A plurality of spinning cones 300 may be provided, may spin together with the spinning shaft 200 around the spinning shaft 200, and may have a spinning speed of 30 rpm to 1000 rpm.

Meanwhile, the upper surface 310 of the spinning cone 300 includes a first surface 311 and a second surface 312.

In this case, the first surface 311 extends with an inclination in the upward direction of the body part 100. More specifically, the first surface 311 extends with an inclination in the upward direction toward a direction distant from the center of the body part 100. The first surface 311 may be provided with an extension part that extends up to the uppermost tip of the spinning cone with an inclination or extends up to a certain point on the upper surface 310 of the spinning cone with an inclination in the upward direction and is not inclined from the certain point to the uppermost tip.

Referring to FIG. 1, an inclination angle of the first surface 311 may be 30° or more and 90° or less with respect to the spinning shaft 200. Preferably, the inclination angle may be 45° or more and 60° or less.

An angle A formed by a tangent line at one end of the second surface 312 meeting the outer surface of the spinning shaft 200 and the spinning shaft 200 is greater than 90° and smaller than 180°. Accordingly, the second surface 312 extends from one end thereof meeting the spinning shaft 200 to the other end thereof meeting the first surface 311 with an inclination in a downward direction of the body part 100. The second surface 312 extends from one end thereof meeting the outer surface of the spinning shaft 200 to the other end thereof meeting the first surface 311 in a concave curved surface shape as in an embodiment of FIG. 1.

More specifically, a slope of the tangent line in contact with the second surface 312 at the one end has a predetermined value. In this case, as illustrated in FIG. 1, the angle A formed by the tangent line at one end of the second surface 312 meeting the outer surface of the spinning shaft 200 and the spinning shaft 200 is greater than 90° and smaller than 180°, and as the second surface 312 extends to the other end, a slope of the tangent line in contact with each point of the second surface 312 gradually decreases, such that the slope of the tangent line in contact with the second surface 312 at the other end becomes zero.

In the distillation apparatus according to an embodiment of the present invention, the slope is formed toward downward direction of the body part 100 from one end of the second surface 312 to the other end of the second surface 312, and thus, there is an effect that slurry or latex does not pool in the vicinity of the spinning shaft 200 inside the body part 100 as compared with a conventional distillation apparatus.

Next, the fixed cone 400 is a component provided on an inner surface of the body part 100, includes an upper surface 410 and a lower surface 420, and is formed in a conical shape along a circumference of the inner surface of the body part 100.

More specifically, a plurality of fixed cones 400 may be provided along a circumference of an inner surface of the side plate 120 of the body part 100. The fixed cone 400 has a shape in which a diameter thereof increases toward an upper tip of the fixed cone 400 (i.e., in the upward direction of the body part 100), similar to the spinning cone 300, and is a component fixed to the inner surface of the side plate 120 without spinning.

Meanwhile, the fixed cones 400 are disposed to be spaced apart from the spinning cone 300 by a predetermined distance. More specifically, one fixed cone 400 is disposed above the upper surface 310 of the spinning cone 300 so as to be spaced apart from the spinning cone 300 by a predetermined distance, and another fixed cone 400 is disposed below the upper surface 310 of the spinning cone 300 so as to be spaced apart from the spinning cone 300 by a predetermined distance. That is, the fixed cones 400 and the spinning cones 300 are alternately arranged in the vertical direction.

Here, the fixed cone 400 serves to guide the distillation target material falling from the upper surface 310 of the spinning cone 300 disposed above the fixed cone 400 to the upper surface 310 of the spinning cone 300 disposed below the fixed cone 400. In this case, the upper surface 410 of the fixed cone 400 has a slope toward the lower portion of the body part 100, and since the upper surface 410 of the fixed cone 400 has such a slope, the distillation target material falling from the spinning cone 300 above the fixed cone 400 may move to the spinning cone 300 below the fixed cone 400 along the slope of the fixed cone 400.

Meanwhile, a distillation process using the distillation apparatus according to the present invention is performed as follows.

When the distillation target material is introduced from the distillation target material introduction part 123, the distillation target material falls to the spinning cone 300. In this case, since the spinning cone 300 is spinning, the distillation target material is spread to an edge distant from the spinning shaft 200 along the upper surface 310 of the spinning cone 300 by a centrifugal force. The distillation target material spread by the centrifugal force falls to the fixed cone 400 disposed below the spinning cone 300, slides and moves along the slope of the upper surface 410 of the fixed cone 400, and then falls to the spinning cone 300 disposed below the fixed cone 400. In this process, the distillation target material reacts with the vapor introduced from the vapor introduction part 125 and rising, such that a volatile material is separated, moved to the lowermost tip of the body part 100, and recovered by the recovery part 133.

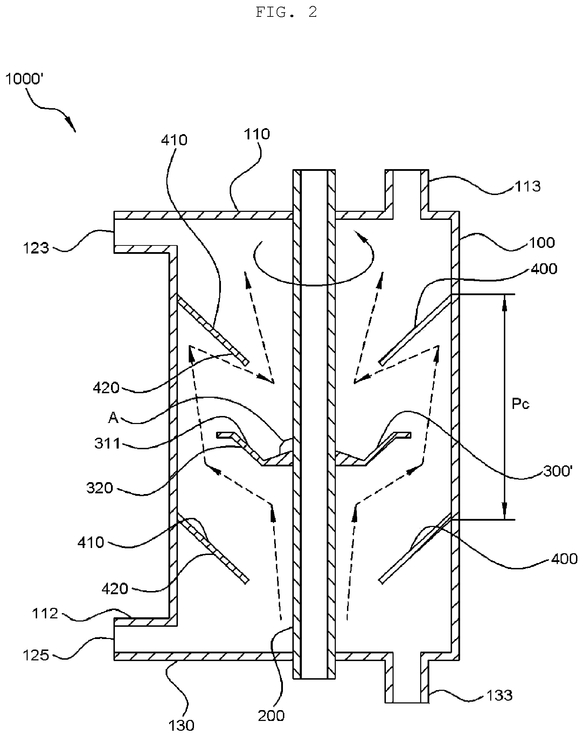

FIG. 2 is a view illustrating a distillation apparatus 1000' according to another design not part of the present invention.

Referring to FIG. 2, the distillation apparatus 1000' includes a body part 100, a spinning shaft 200, a spinning cone 300', and a fixed cone 400.

Here, the body part 100, the spinning shaft 200 and the fixed cone 400 are the same as those of the distillation apparatus 1000 according to an embodiment of the present invention, and a detailed description thereof will thus be omitted.

The distillation apparatus 1000' according to another embodiment of the present invention is different in a shape of a second surface 312' of the spinning cone 300' from the distillation apparatus 1000 according to an embodiment of the present invention.

As illustrated in FIG. 2, the second surface 312' of the spinning cone 300' may extend in a slope shape having a constant slope in the downward direction of the body part 100 from one end thereof meeting the outer surface of the spinning shaft 200 to the other end thereof meeting the first surface 311.

In this case, as illustrated in FIG. 2, an angle A formed by a tangent line at one end of the second surface 312' meeting the outer surface of the spinning shaft 200 and the spinning shaft 200 has a value greater than 90° and smaller than 180°, and since the second surface 312' has a constant slope, the tangent line and the second surface 312' coincide with each other. Preferably, a flat surface of a predetermined area may be provided in the vicinity of the other end of the second surface 312' meeting the first surface 311 in order to prevent the slurry or the latex from pooling.

Also in the distillation apparatus 1000' the slope is formed toward downward direction of the body part 100 from one end of the second surface 312' to the other end of the second surface 312,' and thus, there is an effect that the slurry or the latex does not pool in the vicinity of the spinning shaft 200 inside the body part 100 as compared with a conventional distillation apparatus.

Hereinafter, test results for demonstrating the effect of the distillation apparatus according to the present invention described above will be described with reference to Comparative Examples 1 and 2 and Examples 1 to 3.

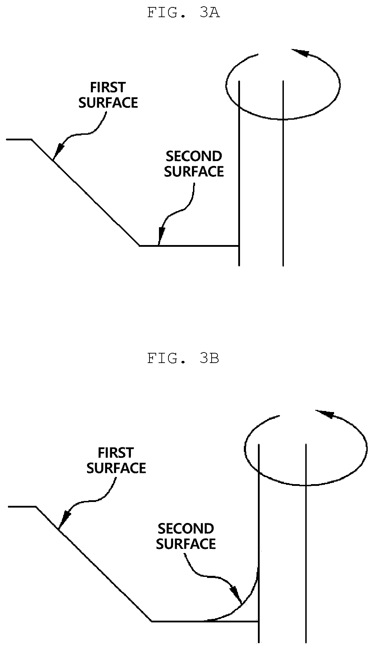

FIG. 3A is a view illustrating a spinning cone of a distillation apparatus according to Comparative Examples 1 and 2, and FIGS. 3B to 3D are views illustrating spinning cones of distillation apparatuses according to Examples 1 to 3.

### <Comparative Example 1>

FIG. 3A is a view illustrating a spinning cone of a distillation apparatus according to Comparative Example 1, and in Comparative Example 1, a second surface of an upper surface of the spinning cone had a shape of a flat surface. A ratio of an area of the second surface to a total area of the upper surface of the spinning cone was 15%.

Describing specific test conditions, in the distillation apparatus according to Comparative Example 1, a polyvinyl chloride (PVC) paste resin flows in the form of latex (solid contents: 45wt%) at an upper portion, and a vapor at 120 °C is injected at 0.03 m³/hr at a lower portion and rises upward together with the residual vinyl chloride monomer (VCM) included in the latex. An inner diameter of a body part is 0.15 m, and a length of a fixed cone is 0.04 m. In this case, the spinning cone spins at 80 rpm, an interval (Pc) between the fixed cones is 1.2 m, and a diameter of a spinning shaft is 0.24 m.

### <Comparative Example 2>

A distillation apparatus according to Comparative Example 2 had the same shape and conditions as the distillation apparatus according to Comparative Example 1 illustrated in FIG. 3A, but a spinning speed of the spinning shaft and the spinning cone was 120 rpm rather than 80 rpm.

### <Example 1>

FIG. 3B illustrates the spinning cone of the distillation apparatus 1000 according to an embodiment of the present invention as Example 1. In Example 1, the second surface of the upper surface of the spinning cone has a concave curved surface shape. Therefore, unlike Comparative Examples 1 and 2, the angle between the tangent line at one end of the second surface meeting the outer surface of the spinning shaft and the spinning shaft was greater than 90°, such that the slope in the downward direction of the body part was formed, and accordingly, slurry or latex was not accumulated in the vicinity of the spinning shaft.

In this case, a ratio of an area of the second surface 312 to a total area of the upper surface 310 of the spinning cone was 15%. A spinning speed of the spinning shaft 200 and the spinning cone 300 is 80 rpm, and other specific test conditions are the same as those in Comparative Example 2.

### <Example 2>

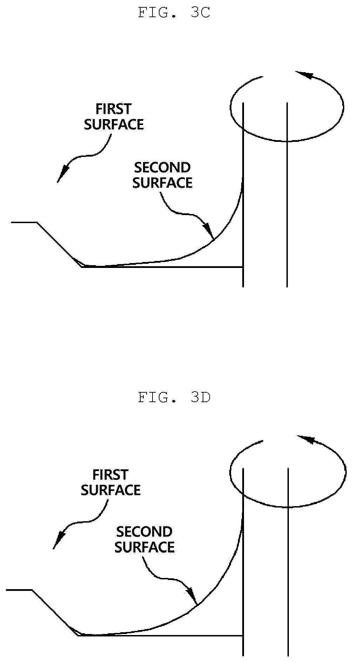

FIG. 3C illustrates the spinning cone of the distillation apparatus according to an embodiment of the present invention as Example 2. In Example 2, the second surface of the upper surface of the spinning cone has a concave curved surface shape. Therefore, unlike Comparative Examples 1 and 2, the angle between the tangent line at one end of the second surface meeting the outer surface of the spinning shaft and the spinning shaft was greater than 90°, such that the slope in the downward direction of the body part was formed, and accordingly, slurry or latex was not accumulated in the vicinity of the spinning shaft.

In this case, in Example 2, a ratio of an area of the second surface to a total area of the upper surface of the spinning cone was 38%. A spinning speed of the spinning shaft and the spinning cone is 80 rpm, and other specific test conditions are the same as those in Comparative Example 2.

### <Example 3>

FIG. 3D illustrates the spinning cone of the distillation apparatus according to an embodiment of the present invention as Example 3. In Example 3, the second surface of the upper surface of the spinning cone has a concave curved surface shape. Therefore, unlike Comparative Examples 1 and 2, the angle between the tangent line at one end of the second surface meeting the outer surface of the spinning shaft and the spinning shaft was greater than 90°, such that the slope in the downward direction of the body part was formed, and accordingly, slurry or latex was not accumulated in the vicinity of the spinning shaft.

In this case, in Example 2, a ratio of an area of the second surface to a total area of the upper surface of the spinning cone was 69%. A spinning speed of the spinning shaft and the spinning cone is 80 rpm, and other specific test conditions are the same as those in Comparative Example 2.

Table 1 organizes test results of Comparative Example 1, Comparative Example 2, Example 1, Example 2, and Example 3.

**[Table 1]**

| | | Comparative Example 1 | Comparative Example 2 | Example 1 | Example 2 | Example 3 |
|---|---|---|---|---|---|---|
| rpm | Spinning speed | 80rpm | 120rpm | 80rpm | 80rpm | 80rpm |
| m/sec | film surface velocity magnitude | 3.288 | 5.016 | 3.148 | 3.819 | 4.331 |
| m | SC film thickness CFD (avg) | 0.0021 | 0.0012 | 0.0015 | 0.0014 | 0.0012 |
| m | SC film thickness CFD (max) | 0.0044 | 0.0027 | 0.0025 | 0.0024 | 0.0020 |
| sec | RT @ sc cones_sum | 1.075 | 0.738 | 1.084 | 0.832 | 0.739 |
| m/sec | mass-transfer coefficient | 0.0096 | 0.0139 | 0.0101 | 0.0113 | 0.0123 |

As described above, in a case where a stripping target material is in the form of polyvinyl chloride (PVC) slurry or latex, when the distillation apparatus is operated at a low speed, the shear force at the tip of the spinning cone may be decreased, but a pooling phenomenon of the slurry or the latex occurs in the vicinity of the spinning shaft, and a sudden load is applied to the spinning shaft and a motor due to a weight of the slurry or the latex. In addition, due to such a pooling phenomenon, a problem that a scale is generated in the vicinity of the spinning axis by PVC particles or a discoloration problem generated by the PVC particles residing for a long time is caused.

In Table 1, a film thickness refers to a thickness in a state in which the distillation target material is spread on the upper surface of the spinning cone by a centrifugal force. An average value (avg) and a maximum value (max) of this thickness were measured.

In addition, RT refers to a residence time, and refers to a time for which the distillation target material resides on the upper surface of the spinning cone.

The greater the film thickness or the longer the RT, the higher the possibility of the generation of the scale and the possibility of the discoloration of the spinning cone due to the pooling of a material.

First, in Comparative Examples 1 and 2 in which second surface of the upper surface of the spinning cone has a shape of a flat surface, it can be seen that a maximum thickness is increased by 60% or more and the RT is also increased by 45% or more in a case where the spinning cone spins at a low speed (80 rpm) as in Comparative Example 1 as compared with a case where the spinning cone spins at a high speed (120 rpm) as in Comparative Example 2. That is, when the distillation apparatus is driven at a low speed, the probability of the generation of a scale increases, and the possibility of discoloration of the upper surface of the spinning cone increases.

On the other hand, in Examples 1, 2, and 3, in which the second surface of the upper surface of the spinning cone has the slope in the downward direction of the body part, a maximum thickness is 0.002 to 0.0025. That is, it can be seen that a maximum thickness is similar to that of the distillation apparatus according to Comparative Example 2 operated at a high speed (120 rpm) even though the distillation apparatus is operated at a low speed (80 rpm).

Accordingly, it can be seen that the distillation apparatus according to the present invention has an effect that the pooling phenomenon of the slurry or the latex in the vicinity of the spinning shaft may be alleviated even when it needs to be operated at a low speed in order to maintain particle stability (or colloidal stability).

As described above, in the distillation apparatus according to the present invention, by changing the shape of the flat surface of the upper surface of the spinning cone, the generation of the scale in the vicinity of the spinning shaft may be decreased and transfer efficiency of the distillation target material may be increased, even when the distillation apparatus is operated at a low speed.

The distillation apparatus according to the present invention may decrease the generation of the scale in the vicinity of the spinning shaft even when being operated at a low speed by changing the shape of the flat surface of the upper surface of the spinning cone.

In addition, the distillation apparatus according to the present invention may increase the transfer efficiency of the distillation target material even when being operated at a low speed by changing the shape of the flat surface of the upper surface of the spinning cone.

## Claims

1. A distillation apparatus comprising:
a body part having an upper portion from which a distillation target material is introduced and a lower portion from which a vapor is introduced;
a spinning shaft spinning inside the body part;
a spinning cone provided on an outer surface of the spinning shaft and including a spinning cone upper surface and a spinning cone lower surface; and
a fixed cone provided on an inner surface of the body part and disposed to be spaced apart from the spinning cone by a predetermined distance,
wherein the spinning cone upper surface includes a first surface and a second surface,
the first surface extends with an inclination in an upward direction of the body part,
an angle formed by a tangent line at one end of the second surface meeting the outer surface of the spinning shaft and the spinning shaft is greater than 90° and smaller than 180°,
the second surface extends from one end thereof meeting the outer surface of the spinning shaft to the other end thereof meeting the first surface in a concave curved surface shape, and
as the second surface extends from the one end to the other end, the slope of the tangent line in contact with each point of the second surface gradually decreases, such that the slope of the tangent line in contact with the second surface at the other end becomes zero.

2. The distillation apparatus of claim 1, wherein an inclination angle of the first surface is 30° or more and 90° or less with respect to the spinning shaft.

3. The distillation apparatus of claim 1, wherein an inclination angle of the first surface is 45° or more and 60° or less with respect to the spinning shaft.

## Patentansprüche

1. Destillationsvorrichtung, umfassend:
einen Körperteil mit einem oberen Abschnitt, über den ein zu destillierendes Zielmaterial eingeleitet wird, und einem unteren Abschnitt, über den ein Dampf eingeleitet wird;
eine Rotationswelle, die sich innerhalb des Körperteils dreht;
einen Rotationskegel, der an einer Außenfläche der Rotationswelle vorgesehen ist und eine obere Rotationskegelfläche und eine untere Rotationskegelfläche umfasst; und
einen feststehenden Kegel, der an einer Innenfläche des Körperteils vorgesehen und in einem vorbestimmten Abstand von dem Rotationskegel angeordnet ist,
wobei die obere Rotationskegelfläche eine erste Fläche und eine zweite Fläche umfasst,
die erste Fläche sich mit einer Neigung in einer Aufwärtsrichtung des Körperteils erstreckt,
ein Winkel, der durch eine Tangente an einem Ende der zweiten Fläche, das auf die Außenfläche der Rotationswelle trifft, und die Rotationswelle gebildet wird, größer als 90° und kleiner als 180° ist,
die zweite Fläche sich von ihrem einen Ende, das auf die Außenfläche der Rotationswelle trifft, zu ihrem anderen Ende, das auf die erste Fläche trifft, in Form einer konkav gekrümmten Fläche erstreckt, und
während sich die zweite Fläche von dem einen Ende zu dem anderen Ende erstreckt, die Steigung der Tangente, die jeden Punkt der zweiten Fläche berührt, allmählich abnimmt, sodass die Steigung der Tangente, die die zweite Fläche an dem anderen Ende berührt, null wird.

2. Destillationsvorrichtung nach Anspruch 1, wobei ein Neigungswinkel der ersten Fläche in Bezug auf die Rotationswelle 30° oder mehr und 90° oder weniger beträgt.

3. Destillationsvorrichtung nach Anspruch 1, wobei ein Neigungswinkel der ersten Fläche in Bezug auf die Rotationswelle 45° oder mehr und 60° oder weniger beträgt.

## Revendications

1. Appareil de distillation comprenant :
une partie corps ayant une portion supérieure par laquelle un matériau cible de distillation est introduit et une portion inférieure par laquelle une vapeur est introduite ;
un arbre rotatif tournant à l'intérieur de la partie corps ;
un cône rotatif prévu sur une surface extérieure de l'arbre rotatif et comprenant une surface supérieure de cône rotatif et une surface inférieure de cône rotatif ; et
un cône fixe prévu sur une surface intérieure de la partie corps et disposé à une distance prédéterminée du cône rotatif,
dans lequel la surface supérieure de cône rotatif comprend une première surface et une deuxième surface,
la première surface s'étend avec une inclinaison dans une direction ascendante de la partie corps,
un angle formé par une ligne tangente à une extrémité de la deuxième surface rejoignant la surface extérieure de l'arbre rotatif et l'arbre rotatif est supérieur à 90° et inférieur à 180°,
la deuxième surface s'étend depuis l'une de ses extrémités rejoignant la surface extérieure de l'arbre rotatif jusqu'à son autre extrémité rejoignant la première surface selon une forme de surface incurvée concave, et
à mesure que la deuxième surface s'étend de ladite une extrémité à l'autre extrémité, la pente de la ligne tangente en contact avec chaque point de la deuxième surface diminue progressivement, de sorte que la pente de la ligne tangente en contact avec la deuxième surface à l'autre extrémité devient nulle.

2. Appareil de distillation selon la revendication 1, dans lequel un angle d'inclinaison de la première surface est de 30° ou plus et de 90° ou moins par rapport à l'arbre rotatif.

3. Appareil de distillation selon la revendication 1, dans lequel un angle d'inclinaison de la première surface est de 45° ou plus et de 60° ou moins par rapport à l'arbre rotatif.
